(19) Europäisches Patentamt
European Patent Office
Office européen des brevets

(11) **EP 3 521 715 B1**

(12) **EUROPEAN PATENT SPECIFICATION**

(45) Date of publication and mention
of the grant of the patent:
**25.08.2021 Bulletin 2021/34**

(51) Int Cl.:
***F24F 7/007*** *(2006.01)*  ***F24F 11/77*** *(2018.01)*
***F24F 11/52*** *(2018.01)*  *F24F 11/00* *(2018.01)*
*F24F 110/52* *(2018.01)*  *F24F 120/14* *(2018.01)*
*F24F 130/40* *(2018.01)*

(21) Application number: **16917699.7**

(22) Date of filing: **29.09.2016**

(86) International application number:
**PCT/JP2016/078822**

(87) International publication number:
**WO 2018/061147 (05.04.2018 Gazette 2018/14)**

(54) **VENTILATION SYSTEM**

**BELÜFTUNGSSYSTEM**

**SYSTÈME DE VENTILATION**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**07.08.2019 Bulletin 2019/32**

(73) Proprietor: **Mitsubishi Electric Corporation
Chiyoda-ku
Tokyo 100-8310 (JP)**

(72) Inventors:
• **KOMAE, Sota**
**Tokyo 100-8310 (JP)**
• **SAIKI, Ayumi**
**Tokyo 100-8310 (JP)**
• **SHIGA, Akira**
**Tokyo 100-8310 (JP)**
• **FURUHASHI, Takuya**
**Tokyo 100-8310 (JP)**

(74) Representative: **Pfenning, Meinig & Partner mbB
Patent- und Rechtsanwälte
An der Frauenkirche 20
01067 Dresden (DE)**

(56) References cited:
EP-A1- 1 752 715    FR-A1- 2 676 367
JP-A- 2007 003 085    JP-A- 2007 263 548
JP-A- 2010 255 898    JP-A- 2013 185 768
JP-A- 2014 047 961    JP-A- 2014 047 961
JP-A- 2016 061 499    KR-B1- 100 765 164

**Description**

Field

The present invention relates to a ventilation system.

Background

An air purifying ventilator is known which includes an air purifying device purifying indoor air, a ventilation device performing ventilation of the indoor air, and a pollution sensor detecting pollution concentration of the indoor air, wherein control is performed to enhance air purifying performance of one or both of the air purifying device and the ventilation device depending on the pollution concentration of the indoor air detected by the pollution sensor (e.g., refer to PTL 1). Air purifying ventilators that comprise a $CO_2$ Sensor or a VOC (Volatile Organic Compounds) Sensor respectively are known (e.g., refer to PTL 2 and 3). Furthermore, indoor environment management systems are known that deal with various aspects of indoor air quality or creating atmospheres of various types for the people present: comfort, refreshment, awakening, somnolence, discomfort, fright or other (e.g., refer to PTL 4 or PTL 5).

Citation List

Patent Literature

[PTL 1] JP H05-015728 A
[PTL 2] EP 1 752 715 A1
[PTL 3] KR 100 765 164 B1
[PTL 4] FR 2 676 367
[PTL 5] JP 2014 047961 A

Summary

Technical Problem

In the ventilation system as disclosed in PTL 1, however, even if pollution occurs in indoor air, it is not possible to perform control to enhance the air purifying performance until the pollution sensor detects pollution of the indoor air. Accordingly, it is difficult to rapidly eliminate pollution of the indoor air. In addition, diffusion of the pollution has been already started at a time when the pollution is detected, and the time necessary for purification of the pollution may become long. Moreover, pollution of outdoor air is not considered at all. Therefore, the polluted outdoor air may flow into an indoor space by operation of the ventilation device, and pollution level of the indoor air may be increased contrariwise.

The present invention is made to solve such issues. An object of the present invention is to provide a ventilation system that makes it possible to rapidly eliminate pollution of indoor air while suppressing increase of a pollution level of the indoor air due to pollution of outdoor air in a case where air pollution may occur indoors.

Solution to Problem

A ventilation system according to the present invention includes: air supply means configured for supplying air from outdoors to indoors; exhaust means configured for exhausting air from the indoors to the outdoors; an indoor sensor configured to detect one or more of action and a position of a person indoors, indoor sound, and change of indoor air pressure as an indoor pollution influential factor that influences a pollution level of indoor air; outdoor pollution level acquisition means configured for acquiring an outdoor pollution level that is a pollution level of outdoor air; and control means configured for controlling an air supply amount of the air supply means and an exhaust amount of the exhaust means, wherein the air supply amount of the air supply means and the exhaust amount of the exhaust means can be changed independently of each other, and the air supply amount of the air supply means and the exhaust amount of the exhaust means are changed based on influence on the pollution level of the indoor air by pollution inflow from the outdoors to the indoors corresponding to the outdoor pollution level and the air supply amount of the air supply means as well as influence on the pollution level of the indoor air by the indoor pollution influential factor.

Advantageous Effects of Invention

In a ventilation system according to the present invention, in a case where air pollution may occur indoors, it is possible to achieve an effect to rapidly eliminate pollution of indoor air while suppressing increase of a pollution level of the indoor air due to pollution of outdoor air.

Brief Description of the Drawings

Fig. 1 is a diagram schematically illustrating an indoor configuration to which a ventilation system according to the Embodiment 1 of the present invention is applied.
Fig. 2 is a perspective view schematically illustrating an appearance of a ventilation controller included in the ventilation system according to the Embodiment 1 of the present invention.
Fig. 3 is a block diagram illustrating an entire configuration of the ventilation system according to the Embodiment 1 of the present invention.
Fig. 4 is a block diagram illustrating a configuration of an outdoor pollution level acquisition unit included in the ventilation system according to the Embodiment 1 of the present invention.
Fig. 5 is a block diagram illustrating a functional configuration of a control unit included in the ventilation system according to the Embodiment 1 of the present invention.
Fig. 6 is a diagram to explain setting examples of an air supply amount and an exhaust amount by the control unit included in the ventilation system according to the Embodiment 1 of the present invention.
Fig. 7 is a diagram to explain an example of operation of an air supply fan and an exhaust fan included in the ventilation system according to the Embodiment 1 of the present invention.
Fig. 8 is a diagram to explain a setting example in which ventilation operation by the control unit included in the ventilation system according to the Embodiment 1 of the present invention and operation of each of an air conditioning apparatus and an air purifier are coordinated with one another.
Fig. 9 is a diagram to explain an example of change of an outdoor pollution level and an indoor pollution level with time when pollution does not occur indoors in the ventilation system according to the Embodiment 1 of the present invention.

Description of Embodiment

An embodiment of the present invention is described with reference to accompanying drawings. In the drawings, same or equivalent parts are denoted by the same reference numerals and overlapped description is appropriately simplified or omitted. Note that the present invention is not limited to the following embodiment, and various modifications may be made without departing from the scope of the present invention as defined in claim 1.

Embodiment 1

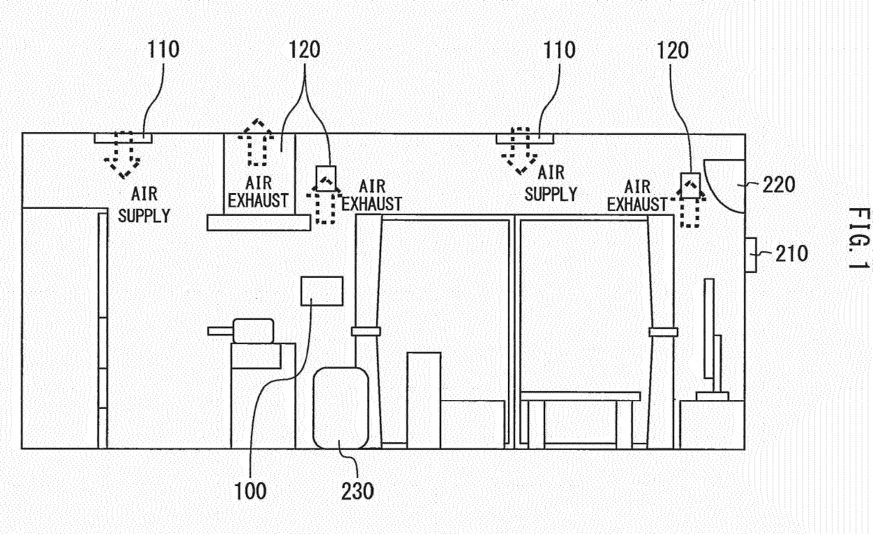

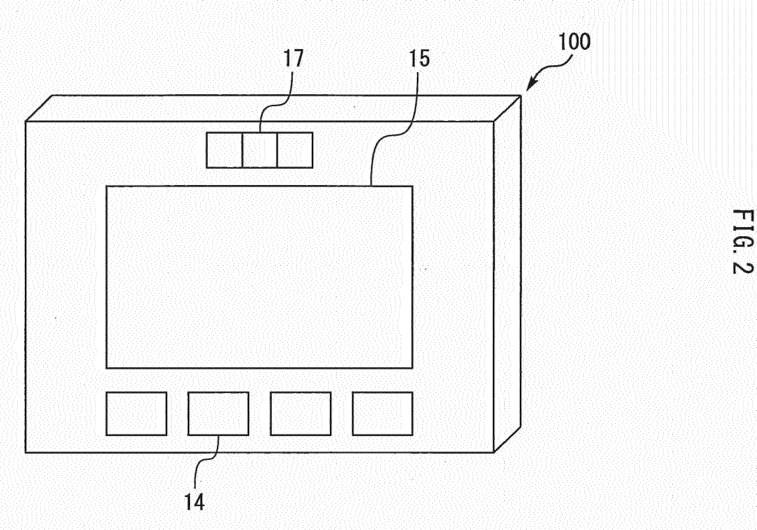

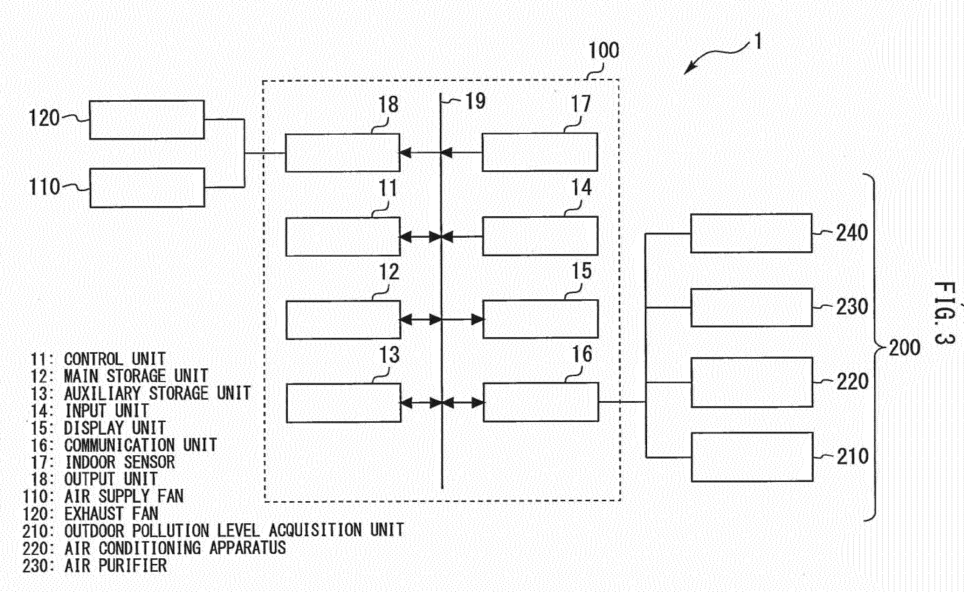

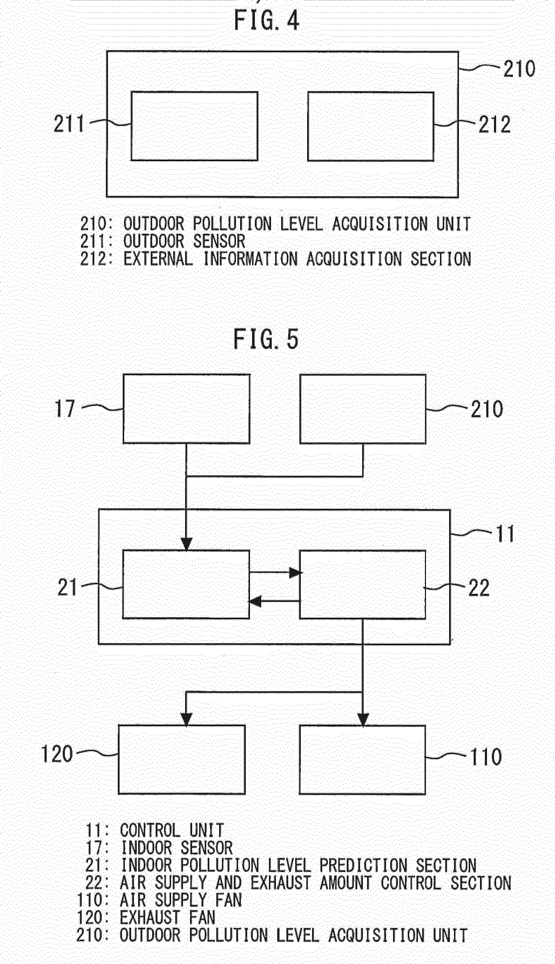

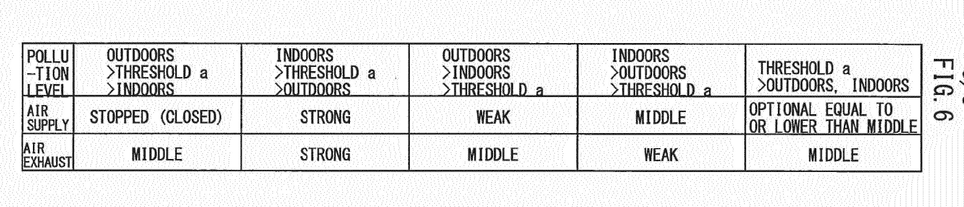

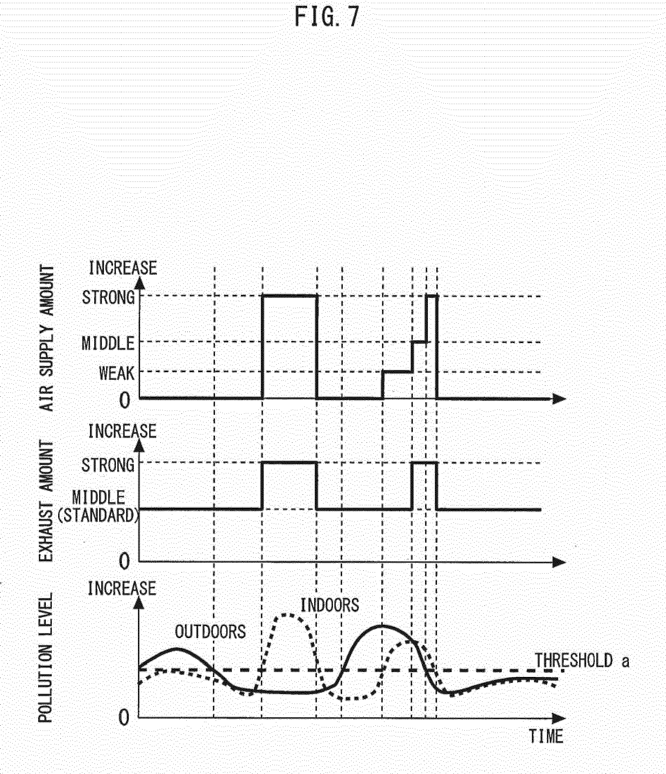

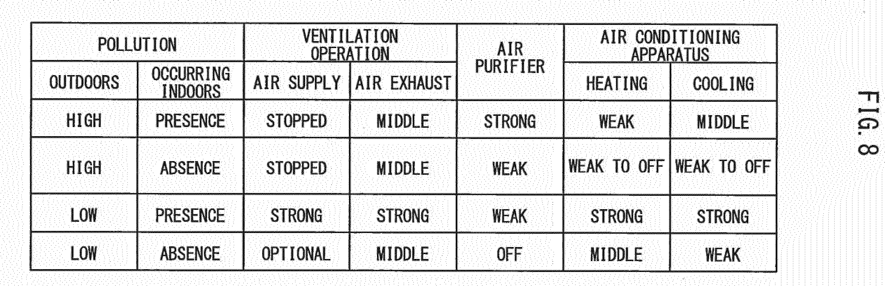

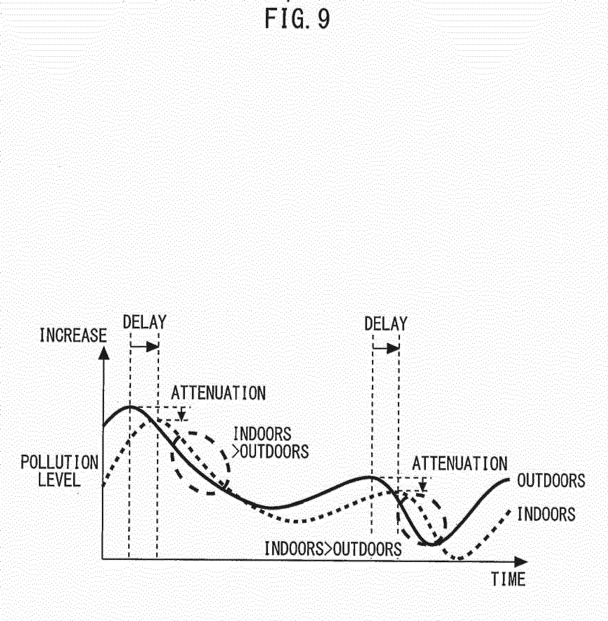

Fig. 1 to Fig. 9 relate to an embodiment 1 of the present invention. Fig. 1 is a diagram schematically illustrating an indoor configuration to which a ventilation system is applied. Fig. 2 is a perspective view schematically illustrating an appearance of a ventilation controller included in the ventilation system. Fig. 3 is a block diagram illustrating an entire configuration of the ventilation system. Fig. 4 is a block diagram illustrating a configuration of an outdoor pollution level acquisition unit included in the ventilation system. Fig. 5 is a block diagram illustrating a functional configuration of a control unit included in the ventilation system. Fig. 6 is a diagram to explain setting examples of an air supply amount and an exhaust amount by the control unit included in the ventilation system. Fig. 7 is a diagram to explain an example of operation of an air supply fan and an exhaust fan included in the ventilation system. Fig. 8 is a diagram to explain a setting example in which ventilation operation by the control unit included in the ventilation system and operation of each of an air conditioning apparatus and an air purifier are coordinated with one another. Fig. 9 is a diagram to explain an example of change of an outdoor pollution level and an indoor pollution level with time when pollution does not occur indoors.

Fig. 1 schematically illustrates an indoor example to which a ventilation system 1 according to the embodiment 1 of the present invention is applied. In the figure, LDK (living, dining, and kitchen) of a residence is illustrated as an example of an indoor space. The ventilation system 1 includes a ventilation controller 100, an air supply fan 110, an exhaust fan 120, an outdoor pollution level acquisition unit 210, an air conditioning apparatus 220, and an air purifier 230.

The air supply fan 110 is air supply means for supplying air from outdoors to indoors. In this case, for example, one air supply fan 110 is installed in each of a LD (living and dining) space and a K (kitchen) space. The exhaust fan 120 is exhaust means for exhausting air from indoors to outdoors. In this case, for example, two exhaust fans 120 are installed in the LD (living and dining) space and one exhaust fan 120 is installed in the K (kitchen) space. Note that, in this example, the exhaust fan 120 installed in the K (kitchen) space is a ventilation fan installed above a kitchen counter.

An air supply amount of the air supply fan 110 serving as the air supply means is determined based on a rotation speed of the air supply fan 110. An air supply amount of the exhaust fan 120 serving as the exhaust means is determined based on a rotation speed of the exhaust fan 120. The rotation speed of the air supply fan 110 and the rotation speed of the exhaust fan 120 can be changed independently of each other. In other words, the air supply amount of the air supply fan 110 and the exhaust amount of the exhaust fan 120 can be changed independently of each other.

Note that the plurality of air supply fans 110 and the plurality of exhaust fans 120 may be provided as the example illustrated in Fig. 1, or one air supply fan 110 and one exhaust fan 120 may be provided. Further, the air supply fan 110 and the exhaust fan 120 may be integrated as, for example, a ventilation device.

The ventilation controller 100 is provided separately from other devices configuring the ventilation system 1. In the example illustrated in Fig. 1, the ventilation controller 100 is installed in an interior wall part of the LD (living and dining) space. The ventilation controller 100 controls operation of each of the air supply fan 110 and the exhaust fan 120. The ventilation controller 100 and each of the air supply fan 110 and the exhaust fan 120 are connected to each other through, for example, unillustrated wirings laid inside a wall.

The ventilation controller 100 includes, for example, a box-shaped appearance as illustrated in Fig. 2. As illustrated in the figure, an input unit 14, a display unit 15, and an indoor sensor 17 are provided on the appearance of the ventilation controller 100. The input unit 14 receives user operation with respect to the ventilation controller 100. The input unit 14 includes, for example, an input key and a pointing device.

The display unit 15 provides information to a user. The display unit 15 includes, for example, a Liquid Crystal Display (LCD) and a speaker.

The indoor sensor 17 detects an indoor pollution influential factor. The indoor pollution influential factor is a factor influencing a pollution level of the indoor air. Specific examples of the indoor pollution influential factor include action and a position of a person indoors, indoor sound, and change of indoor air pressure. According to the invention, the indoor sensor 17 detects one or more of action and a position of a person indoors, indoor sound, and change of indoor air pressure, as the indoor pollution influential factor.

To detect action and a position of a person indoors, the indoor sensor 17 includes a motion sensor using, for example, an infrared sensor that senses action and a position of a person. To detect indoor sound, the indoor sensor 17 includes a sound sensor that detects, for example, a magnitude and a frequency of ambient sound. To detect change of indoor air pressure, the indoor sensor 17 includes a pressure sensor.

Further, the indoor sensor 17 may include a pollution sensing sensor that detects the pollution level of indoor air, for example, an amount of dust in the indoor air and concentration of an odor material. Furthermore, the indoor sensor 17 may detect wind velocity, temperature, and humidity of the indoor air.

Note that, as described above, the ventilation controller 100 is installed as of so-called wall-hanging type, on the indoor interior wall surface in the example illustrated in Fig. 1. This makes it possible to improve installability of the ventilation controller 100. In addition, an installation height of the ventilation controller 100 is easily adjustable, which improves operability of the user. Moreover, an installation position of the ventilation controller 100 is adjusted to install the ventilation controller 100 at a position where there is nothing to cover the ventilation controller 100, which makes it possible to expect improvement of detection accuracy of the indoor sensor 17.

The description is continued with reference to Fig. 1 again. As illustrated in the figure, the ventilation system 1 further includes the outdoor pollution level acquisition unit 210, the air conditioning apparatus 220, and the air purifier 230. The outdoor pollution level acquisition unit 210 is installed outdoors. In this example, the outdoor pollution level acquisition unit 210 is installed on an exterior wall part of the house. The outdoor pollution level acquisition unit 210 is outdoor pollution level acquisition means for acquiring an outdoor pollution level. The outdoor pollution level is a pollution level of the outdoor air.

The air conditioning apparatus 220 and the air purifier 230 are installed indoors. The air conditioning apparatus 220 sucks indoor air from an air inlet, performs processing such as heating, cooling, dehumidification on the air, and sends the resultant air to the room from an air outlet, thereby performing air conditioning. Examples of the air conditioning apparatus 220 include an indoor machine of an air conditioner, a dehumidifier, a humidifier, and a heating appliance. In this example, the air conditioning apparatus 220 is an indoor machine of an air conditioner and is installed on an interior wall part of the LD (living and dining) space indoors.

The air purifier 230 is a blower including a function of purifying the indoor air. The air purifier 230 includes, in addition to a common air purifier, apparatuses including a function to improve quality of the indoor air, for example, an electric fan including an air purifying function, and an ion generator. In this example, the air purifier 230 is installed between the LD (living and dining) space and the K (kitchen) space. When the air purifier 230 is installed at this position, the air purifier 230 can cope with occurrence of pollution in both of the LD (living and dining) space and the K (kitchen) space. Note that the air conditioning apparatus 220 and the air purifier 230 may be integrated.

Next, the entire configuration of the ventilation system 1 is described with reference to Fig. 3. As illustrated in the figure, the ventilation controller 100 includes a control unit 11, a main storage unit 12, an auxiliary storage unit 13, a communication unit 16, and an output unit 18, in addition to the input unit 14, the display unit 15, and the indoor sensor 17 described above. These units included in the ventilation controller 100 are connected to one another by a bus 19 included in the ventilation controller 100, for exchange of information.

The control unit 11 controls entire operation of the ventilation controller 100. The control unit 11 includes a CPU (Central Processing Unit), etc. The control unit 11 executes a setting program and a ventilation control program that are stored by the auxiliary storage unit 13, with use of the main storage unit 12 as a work area, thereby executing preset setting processing and preset ventilation control processing. Specific contents of functions, etc. realized by execution of the processing are described later.

The main storage unit 12 includes a RAM (Random Access Memory), etc. The main storage unit 12 loads the setting program and the ventilation control program from the auxiliary storage unit 13 and is used as the work area of the control unit 11.

The auxiliary storage unit 13 includes a non-volatile memory such as an HDD (Hard Disk Drive) and a flash memory. The auxiliary storage unit 13 stores the setting program and the ventilation control program. The auxiliary storage unit 13 further stores various data to be used in the processing by the control unit 11. For example, data acquired by the indoor sensor 17 is stored in the auxiliary storage unit 13. The auxiliary storage unit 13 supplies data to be used by the control unit 11, to the control unit 11, and stores data supplied from the control unit 11, according to instructions from the control unit 11.

The input unit 14 acquires information input by the user, and transmits the information to the control unit 11. The display unit 15 presents various information to the user according to an instruction from the control unit 11. A detection result of the indoor sensor 17 is transmitted to one or both of the control unit 11 and the auxiliary storage unit 13.

The output unit 18 outputs a control signal to each of the air supply fan 110 and the exhaust fan 120, based on a result of the processing executed by the control unit 11. Each of the air supply fan 110 and the exhaust fan 120 operate in response to the control signal supplied from the output unit 18. The control unit 11 configures control means for controlling the air supply amount of the air supply fan 110 and the exhaust amount of the exhaust fan 120 in the above-described manner.

Note that, in a case where the plurality of air supply fans 110 and the plurality of exhaust fans 120 are provided as illustrated in Fig. 1, the control unit 11 may independently control operation of each of the plurality of air supply fans 110 and the plurality of exhaust fans 120. More specifically, for example, the control unit 11 may perform control such that only the exhaust fan 120 near a position where pollution occurs operates.

The ventilation controller 100 is communicably connected to facility apparatuses 200 through the communication unit 16. The communication unit 16 includes a communication interface circuit etc. for communication with the facility apparatuses 200. The facility apparatuses 200 connected to the ventilation controller 100 include a HEMS 240 (Home Energy Management System), in addition to the outdoor pollution level acquisition unit 210, the air conditioning apparatus 220, and the air purifier 230 described above. The HEMS 240 is connected to electric appliances provided indoors, and includes a function to measure power consumption. The HEMS 240 is an apparatus that calculates the power consumption of the electric appliances in the home and controls operation of each of the electric appliances.

The communication unit 16 and each of the facility apparatuses 200, and the facility apparatuses 200 are connected by a communication network including, for example, a wired or wireless LAN (Local Area Network). The air conditioning apparatus 220 and the air purifier 230 are desirably connected through a wireless communication system because the installation positions etc. thereof may be changed.

As described above, the outdoor pollution level acquisition unit 210 is the outdoor pollution level acquisition means for acquiring the outdoor pollution level. Therefore, the outdoor pollution level acquisition unit 210 includes an outdoor sensor 211 and an external information acquisition section 212, as illustrated in Fig. 4.

The outdoor sensor 211 detects one or both of outdoor gas concentration and outdoor dust concentration. To detect the outdoor dust concentration, the outdoor sensor 211 includes, for example, a PM2.5 sensor. The outdoor sensor 211 may detect outdoor temperature, humidity, atmospheric pressure, etc. Note that, as the outdoor sensor 211, for example, a sensor installed in the outdoor machine of the air conditioning apparatus 220 may be used.

The external information acquisition section 212 is external information acquisition means for acquiring pollution information on the outdoor air from outside. The external information acquisition section 212 is connected to an external communication network such as the Internet. Further, the external information acquisition section 212 acquires the pollution information on the outdoor air from an external information source through the Internet, etc. Specific examples of the pollution information on the outdoor air include information about an occurrence state of PM2.5, pollens, and photochemical smog.

The outdoor pollution level acquisition unit 210 transmits, as environmental information around the house, one or both of the outdoor gas concentration and the outdoor dust concentration detected by the outdoor sensor 211 as well as the pollution information on the outdoor air acquired by the external information acquisition section 212, to the ventilation controller 100 in real time. In other words, the environmental information transmitted by the outdoor pollution level acquisition unit 210 includes the outdoor pollution level.

The outdoor pollution level acquisition unit 210 preferably includes both of the outdoor sensor 211 and the external information acquisition section 212; however, may not include both of the outdoor sensor 211 and the external information acquisition section 212. In other words, it is sufficient for the outdoor pollution level acquisition unit 210 to include at least one of the outdoor sensor 211 and the external information acquisition section 212.

Note that the case where the ventilation controller 100 is provided separately from other devices has been described above; however, the ventilation controller 100 may be incorporated in any of the facility apparatuses 200. This makes it possible to achieve space saving. Further, for example, software may be installed in a general computing device such as a personal computer and a mobile phone to realize the functions of the ventilation controller 100. This makes it possible to construct the ventilation system 1 without preparing a dedicated apparatus for the ventilation controller 100, and to facilitate system introduction.

Further, the ventilation controller 100 may receive the operation states of the air conditioning apparatus 220 and the air purifier 230 and the detection results of the sensors provided in the air conditioning apparatus 220 and the air purifier 230, and detect the indoor pollution influential factor from the information. Moreover, the ventilation controller 100 determines whether each of the electric appliances operates, based on the power consumption of each of the electric appliances acquired from the HEMS 240, thereby detecting action of a person.

Next, a functional configuration of the control unit 11 of the ventilation controller 100 is described with reference to Fig. 5. Note that, in the figure, illustration of the communication unit 16 and the output unit 18 is omitted. As illustrated in the figure, the control unit 11 includes an indoor pollution level prediction section 21 and an air supply and exhaust amount control section 22.

The indoor pollution level prediction section 21 is indoor pollution level prediction means for predicting the pollution level of the indoor air. More specifically, in this case, the indoor pollution level prediction section 21 predicts the pollution level of the indoor air, based on the indoor pollution influential factor detected by the indoor sensor 17, the outdoor pollution level acquired by the outdoor pollution level acquisition unit 210, and the air supply amount of the air supply fan 110.

In other words, first, the indoor pollution level prediction section 21 predicts an occurrence degree of indoor pollution, based on the indoor pollution influential factor detected by the indoor sensor 17. More specifically, for example, in a case where action of a person is detected by the indoor sensor 17, the indoor pollution level prediction section 21 predicts occurrence of pollution caused by activity of the person indoors. For example, in a case where action of the person is detected in the kitchen, pollution such as smoke and smell may occur due to cooking. Further, also in a case where indoor sound is detected by the indoor sensor 17, the detected sound is considered to be caused by activity of the person. Therefore, the indoor pollution level prediction section 21 can predict occurrence of pollution caused by the activity of the person. In a case where change of the indoor air pressure is detected by the indoor sensor 17, a door of an indoor room has possibly been opened or closed. Therefore, the indoor pollution level prediction section 21 can predict that the person moves through opening/closing of the door and pollution occurs due to the movement of the person.

Second, the indoor pollution level prediction section 21 predicts an inflow degree of pollution from outdoors to indoors, based on the outdoor pollution level acquired by the outdoor pollution level acquisition unit 210 and the air supply amount of the air supply fan 110. In other words, the indoor pollution level prediction section 21 can predict that the inflow degree of pollution from outdoors to indoors is increased as the outdoor pollution level is larger or the air supply amount is larger. In addition, the indoor pollution level prediction section 21 predicts the pollution level of the indoor air by integrating the predicted occurrence degree of indoor pollution and the predicted inflow degree of pollution from outdoors to indoors.

Note that the indoor pollution level prediction section 21 may include a function of learning about relationship between the indoor pollution influential factor detected by the indoor sensor 17 and the pollution level of the indoor air. More specifically, for example, a sensor that detects the indoor pollution level similar to the outdoor sensor 211 is provided in the indoor sensor 17. In addition, the indoor pollution level prediction section 21 may learn in such a manner that the indoor pollution level predicted from the indoor pollution influential factor and an actually-detected indoor pollution level are compared, and a prediction parameter is adjusted so as to reduce a difference therebetween.

The air supply and exhaust amount control section 22 sets the air supply amount of the air supply fan 110 and the exhaust amount of the exhaust fan 120, based on the pollution level of the indoor air predicted by the indoor pollution level prediction section 21. In addition, the air supply and exhaust amount control section 22 generates a control signal to cause the air supply fan 110 to operate with the set air supply amount. The generated control signal is transmitted from the output unit 18 to the air supply fan 110. In addition, the air supply and exhaust amount control section 22 generates a control signal to cause the exhaust fan 120 to operate with the set exhaust amount. The generated control signal is transmitted from the output unit 18 to the exhaust fan 120. The air supply and exhaust amount control section 22 configures air supply and exhaust amount control means for controlling the air supply amount of the air supply fan 110 and the exhaust amount of the exhaust fan 120, based on the pollution level of the indoor air predicted by the indoor pollution level prediction section 21, in the above-described manner.

At this time, the air supply and exhaust amount control section 22 desirably controls the air supply amount of the air supply fan 110 and the exhaust amount of the exhaust fan 120 such that the ventilation amount does not become lower than a predetermined ventilation amount. A reference ventilation amount at this time is specifically set to, for example, 0.5 times/h.

Note that, if the air supply amount is changed as a result of the control by the air supply and exhaust amount control section 22, the inflow degree of pollution from outdoors to indoors is also changed. Accordingly, the indoor pollution level prediction section 21 preferably predicts the inflow degree of pollution from outdoors to indoors in consideration of the changed air supply amount. Consequently, the indoor pollution level prediction section 21 preferably acquires information about the air supply amount of the air supply fan 110, from the air supply and exhaust amount control section 22.

In the ventilation system 1 including the above-described configuration, the air supply amount of the air supply fan 110 and the exhaust amount of the exhaust fan 120 are changed based on the influence on the pollution level of the indoor air by the pollution inflow from outdoors to indoors corresponding to the outdoor pollution level and the air supply amount of the air supply fan 110, and based on the influence on the pollution level of the indoor air by the indoor pollution influential factor.

Accordingly, in a case where pollution may occur indoors, it is possible to rapidly eliminate pollution of the indoor air while suppressing increase of the pollution level of the indoor air due to pollution of the outdoor air.

Note that the functions of the indoor pollution level prediction section 21 and the air supply and exhaust amount control section 22 are realized when the control unit 11 executes processing according to the setting program and the ventilation control program described above.

Further, it is unnecessary for the indoor pollution level prediction section 21 to perform prediction calculation of the indoor pollution level every time. The indoor pollution level prediction section 21 may previously calculate the prediction result of the indoor pollution level with respect to various values of the indoor pollution influential factor, the outdoor pollution level, and the air supply amount, and may store the indoor pollution influential factor, the outdoor pollution level, the air supply amount, and the prediction result of the indoor pollution level in, for example, the auxiliary storage unit 13. In addition, the indoor pollution level prediction section 21 may refer to the stored data to determine the prediction result of the indoor pollution level.

Likewise, it is unnecessary for the air supply and exhaust amount control section 22 to perform setting calculation of the air supply amount and the exhaust amount every time. The relationship between the prediction result of the indoor pollution level and the settings of the air supply amount and the exhaust amount may be previously stored in, for example, the auxiliary storage unit 13, and the air supply and exhaust amount control section 22 may refer to the stored data to set the air supply amount and the exhaust amount.

Next, examples of the settings of the air supply amount of the air supply fan 110 and the exhaust amount of the exhaust fan 120 by the control unit 11 are described with reference to Fig. 6.

In this example, the case where the control unit 11 includes the indoor pollution level prediction section 21 that predicts the pollution level of the indoor air from the indoor pollution caused by the indoor pollution influential factor and the pollution inflow from outdoors to indoors, and the air supply and exhaust amount control section 22 sets the air supply amount and the exhaust amount based on the pollution level of the indoor air predicted by the indoor pollution level prediction section 21, has been described above.

The specific form, however, is not limited to the above-described form as long as the control unit 11 can set the air supply amount of the air supply fan 110 and the exhaust amount of the exhaust fan 120 in consideration of the influence on the pollution level of the indoor air by the pollution inflow from outdoors to indoors corresponding to the outdoor pollution level and the air supply amount of the air supply fan 110, and in consideration of the influence on the pollution level of the indoor air by the indoor pollution influential factor. For example, the indoor pollution level prediction section 21 may predict only the indoor pollution caused by the indoor pollution influential factor, and the air supply and exhaust amount control section 22 may set the air supply amount and the exhaust amount based on the indoor pollution predicted by the indoor pollution level prediction section 21 and the inflow degree of pollution from outdoors to indoors.

Further, at this time, since the inflow degree of pollution from outdoors to indoors is changed depending on the air supply amount as described above, the air supply and exhaust amount control section 22 preferably uses the inflow degree of pollution based on not the current air supply amount but the air supply amount after setting. Accordingly, in this case, the air supply and exhaust amount control section 22 sets the air supply amount and the exhaust amount, based on the indoor pollution predicted by the indoor pollution level prediction section 21 and the outdoor pollution level acquired by the outdoor pollution level acquisition unit 210.

Fig. 6 illustrates an example in a case where the air supply and exhaust amount control section 22 sets the air supply amount and the exhaust amount based on magnitude relationship among the indoor pollution level predicted from the indoor pollution influential factor, the outdoor pollution level acquired by the outdoor pollution level acquisition unit 210, and a predetermined threshold a, under such a concept. Note that, in the example illustrated in the figure, a middle air volume of the exhaust and a middle air volume of the air supply are equivalent to each other.

In this example, first, the exhaust fan 120 is not stopped and the fixed exhaust amount is constantly secured. This makes it possible to prevent the ventilation amount from becoming lower than the predetermined ventilation amount. If the exhaust fan 120 does not operate, carbon dioxide concentration is increased with decrease of indoor oxygen concentration, which may extremely deteriorate living environment for the user. Preventing the ventilation amount from becoming lower than a predetermined ventilation amount makes it possible to avoid occurrence of such a situation. In a case where the level of pollution that occurs indoors (hereinafter, referred to as "indoor occurring pollution level") exceeds the threshold a, the exhaust amount is increased to discharge pollution occurring indoors to outdoors.

In addition, the air supply amount is adjusted based on the outdoor pollution level and the exhaust amount. At this time, the exhaust amount is preferably made equal to or larger than the air supply amount to prevent indoor atmospheric pressure from becoming positive. If the indoor atmospheric pressure becomes the positive pressure, indoor moisture flows toward outdoors, which causes dew condensation inside a wall body especially in winter. Accordingly, the indoor atmospheric pressure is desirably adjusted so as not to become positive pressure.

In a case where the outdoor pollution level exceeds the threshold a and the indoor occurring pollution level is lower than the threshold a, the exhaust amount is set to "middle" and the air supply fan 110 is stopped. If possible, an air supply port of the air supply fan 110 is desirably closed to isolate indoors from outdoors. This makes the indoor atmospheric pressure negative, and as a result, the air is going to enter indoors from a gap of a house. When the air is not directly taken in from outdoors but the air is taken in from another indoor space through the gap of the house, it is possible to suppress inflow of pollution from outdoors to indoors. It is also expected that pollution of the air directly taken in from outdoors is filtered by the narrow gap.

In a case where the indoor pollution level exceeds the threshold a and the indoor occurring pollution level is lower than the threshold a, both of the exhaust amount and the air supply amount are set to "strong". The outdoor air cleaner than the indoor air is actively taken in by air supply and pollution is actively discharged to outdoors by exhaust, which makes it possible to generate flow of wind from the air supply to the exhaust. As a result, it is possible to achieve an effect to rapidly purify the pollution while suppressing indoor diffusion of the pollution.

In a case where the indoor occurring pollution level exceeds the threshold a but the outdoor pollution level is higher than the indoor occurring pollution level, the exhaust amount is set to "middle" and the air supply amount is set to "weak" that is lower than the exhaust amount. This is because the air supply is desirably performed in order to efficiently exhaust air; however, in a case where the outdoor air is polluted more than the indoor air, the air supply amount is desirably reduced to give priority to suppression of inflow of the polluted outdoor air to indoors.

In a case where the indoor occurring pollution level and the outdoor pollution level are both lower than the threshold a, the exhaust amount is set to "middle", and the air supply amount is set to be equal to or lower than the exhaust amount, namely, may be optional equal to or lower than "middle".

Note that, in the case where the indoor temperature and the indoor humidity are also detected by the indoor sensor 17, the air supply amount and the exhaust amount may be set in consideration of the detected indoor temperature and the detected indoor humidity. More specifically, in a case where the indoor humidity is lower than a predetermined reference value, the air supply amount may be made larger than the exhaust amount to make the indoor atmospheric pressure positive. For example, in a case where the indoor occurring pollution level is larger than the outdoor pollution level, the air supply amount is increased to take in the outdoor clean air in a large amount, which makes it possible to push out the indoor air by the clean air. Further, this accelerates purifying speed of the indoor pollution. In addition, an effect to prevent pollution that locally and unexpectedly occurs outdoors due to garden cleaning, bonfire, operation of an automobile, etc., from entering indoors without through the air supply fan 110, can also be expected.

Note that the threshold a used above is set based on, for example, an allowable pollution level for each of the outdoor pollution level and the indoor occurring pollution level. At this time, in a case where an air purifying mechanism such as a dust collection filter and a deodorization filter is especially provided in the air supply fan 110, a threshold a' for the outdoor pollution level may be set besides the threshold a for the indoor occurring pollution level. In this case, more specifically, the outdoor threshold a' is preferably determined from the indoor threshold a by the following expression (1) in consideration of a transient pollution purification ratio $\eta$ (%) of the air purifying mechanism during standard operation.

$$a' = a/(1 - \eta/100) \quad \dots \quad (1)$$

The pollution purification ratio $\eta$ (%) of a filter generally tends to increase as velocity of air passing through the filter, namely, the air volume of the air supply fan 110 in this case is smaller. The outdoor threshold a' is made larger than the indoor threshold a based on the pollution purification ratio $\eta$, which makes it possible to maintain a state where the air supply amount is small even when the outdoor pollution level becomes large. Accordingly, in a case where the outdoor pollution level is large, the velocity of air passing through the filter of the air supply fan 110 is made small to enhance the pollution purifying performance of the air supply by the filter. Note that, in the case where the air purifying mechanism is provided in the air supply fan 110, the threshold a and the threshold a' are desirably set so as to actively use the air supply because the outdoor air can be purified and be taken in indoors.

Fig. 7 is a diagram to explain an example of operation of the air supply fan and the exhaust fan in the setting example illustrated in Fig. 6. As illustrated in Fig. 7, during the normal state, the air supply fan 110 is stopped to make the air supply amount zero, and the exhaust amount of the exhaust fan 120 is set to "middle" to maintain the predetermined ventilation ratio. When the indoor occurring pollution level exceeds the threshold a, the operation of the air supply fan 110 is started.

At this time, in the case where the indoor occurring pollution level exceeds the threshold a but the outdoor pollution level is larger than the indoor occurring pollution level, the air supply amount of the air supply fan 110 is set to "weak". In addition, in the case where the outdoor pollution level is smaller than the indoor occurring pollution level and is larger than the threshold a, the air supply amount of the air supply fan 110 is set to "middle" and the exhaust amount of the exhaust fan 120 is set to "strong". In the case where the indoor occurring pollution level still exceeds the threshold a but the outdoor pollution level becomes lower than the threshold a, the air supply amount of the air supply fan 110 is set to "strong".

As described above, in the ventilation system 1 according to the embodiment 1 of the present invention, the air conditioning apparatus 220 and the air purifier 230 as the facility apparatuses 200 are communicably connected to the ventilation controller 100. Therefore, the ventilation controller 100 may control the operation of the air conditioning apparatus 220 and the air purifier 230 so as to cooperate with the operation of the air supply fan 110 and the exhaust fan 120. An example in which the operation of the air supply fan 110 and the exhaust fan 120 and the air conditioning apparatus 220 and the air purifier 230 are controlled in cooperation with one another according to the pollution situation is described with reference to Fig. 8.

Note that the figure illustrates an example in which the outdoor pollution level is determined with use of the threshold but it is only determined whether indoor pollution occurs, as for the indoor occurring pollution level. As illustrated in the figure, in the case where pollution occurs indoors and the outdoor pollution level is high, the air purifier 230 operates instead of operation of the air supply fan 110. This makes it possible to purify pollution occurring indoors by the air purifier 230 while suppressing inflow of pollution from outdoors to indoors.

Note that, when the air purifier 230 operates, wind from the air purifier 230 is blown to the user and the user easily feels discomfort. Moreover, the air purifier 230 is large in operation sound. Accordingly, the air purifier 230 desirably operates at weak setting as much as possible. In addition, a period until maintenance is shortened as the strong operation time of the air purifier 230 is longer, which may cause troublesome feeling of the user. From such a viewpoint, the air purifier 230 preferably operates at weak setting as much as possible.

The operation of the air conditioning apparatus 220 is set based on the ventilation amount. For example, in a case where pollution occurs indoors and the outdoor pollution level is low, the air supply fan 110 and the exhaust fan 120 both operate at "strong" setting and the ventilation amount is temporarily increased in order to discharge the pollution occurring indoors to outdoors. At this time, it is necessary to temporarily intensify the operation of the air conditioning apparatus 220 in summer and winter because a large amount of outside air flows into indoors. Accordingly, the air volume of the air conditioning apparatus 220 is set to "strong" during both of cooling operation and heating operation.

Further, the operation of the air conditioning apparatus 220 is also changed depending on the operation of the air purifier 230. For example, in a case where the air purifier 230 performs the strong operation, an effect of stirring indoor air is temporarily enhanced and warm air near a ceiling tends to move downward to a floor. Accordingly, in the case where the air purifier 230 performs the strong operation, the air volume of the air conditioning apparatus 220 during the cooling operation is set larger than the air volume during the heating operation. In contrast, in a case where the air purifier 230 is stopped, warm air stays at an upper part and air near the floor is difficult to be warmed. Accordingly, in the case where the air purifier 230 is stopped, the air volume of the air conditioning apparatus 220 during the heating operation is set larger than the air volume during the cooling operation.

Note that, in the ventilation system 1 including the above-described configuration, one or more of the indoor pollution influential factor detected by the indoor sensor 17, the outdoor pollution level acquired by the outdoor pollution level acquisition unit 210, the air supply amount of the air supply fan 110, and the exhaust amount of the exhaust fan 120 may be displayed on the display unit 15. Further, the pollution level of the indoor air predicted by the indoor pollution level prediction section 21 may be displayed on the display unit 15. The indoor pollution influential factor is preferably especially displayed, as a person presence/absence state, on the display unit 15 when being displayed.

Further, information acquired from the HEMS 240 may be displayed on the display unit 15 together with these information. Specific examples of the information acquired from the HEMS 240 include the operation states, the power consumption, the electric fees, etc. of the electric appliances including the air conditioning apparatus 220 and the air purifier 230 that are managed by the HEMS 240. Further, in the case where the air temperature and the air humidity are detected by one or both of the indoor sensor 17 and the outdoor sensor 211, the temperature and the humidity, or a comfort index etc. may be displayed on the display unit 15.

This enables the user to easily understand the operation state of the ventilation system 1, the indoor pollution state, and the outdoor pollution state, from the contents displayed on the display unit 15. Further, the user can adjust the operation of each of the apparatuses with use of the input unit 14 to customize the settings in order to form environment more suitable for the user, with reference to the electric fees, the pollution states, the temperature, the humidity, etc. Further, presenting difference between before and after the setting change by the user enables the user to estimate an improvement effect of the environment or the electric fees. Note that, when the set contents input by the user through the input unit 14 at this time are stored together with the detection data of the indoor sensor 17, it is possible to automatically reflect the set contents previously input by the user, in subsequent similar situations.

As described above, the factors causing pollution of the indoor air include the factors flowing from outdoors and the factors occurring indoors. Among them, as for the factors occurring outdoors, it is considered that the outdoor pollution hardly occurs unexpectedly near the house. Therefore, it is sufficient to detect the pollution when the diffused pollution reaches the house. To do so, the outdoor pollution level acquisition unit 210 includes the outdoor sensor 211. Further, the outdoor pollution level acquisition unit 210 includes the external information acquisition section 212 because the outdoor pollution level acquisition unit 210 can cope with the pollution through the external information distributed by the Internet, etc.

Fig. 9 is a diagram to explain an example of change of the outdoor pollution level and the indoor pollution level with time when pollution does not occur indoors. In a case where the outdoor air is taken into indoors as is or in a case where the outside air is taken in as is, the indoor pollution level has the same change tendency including predetermined delay as the change tendency of the outdoor pollution level while being slightly attenuated. It is considered that, in the pollution attenuation, lost is caused by deposition of the pollution in the inflow path, depending on the path through which the air passes to enter indoors. The delay in the change tendency is caused by the time necessary for the inflow of the air from outdoors to indoors. When the outdoor pollution level is increased and is then drastically decreased, a phenomenon in which the indoor pollution level temporarily exceeds the outdoor pollution level may occur from such characteristics.

In the ventilation system 1 including the above-described configuration, the air supply amount of the air supply fan 110 and the exhaust amount of the exhaust fan 120 are changed based on the influence on the pollution level of the indoor air by the pollution inflow from outdoors to indoors corresponding to the outdoor pollution level and the air supply amount of the air supply fan 110, as described above. This makes it possible to prevent the air from being taken in from outdoors to indoors when the outdoor pollution level is large. As a result, it is possible to prevent occurrence of the above-described phenomenon.

Further, understanding of the outdoor pollution state leads to prevention of ventilation that is intentionally performed by the user. For example, in the case where the outdoor pollution concentration exceeds the threshold, an effect to persuade the user out of increasing the ventilation air volume through opening/closing of a window or manual operation can be expected by notifying the user of the fact.

In contrast, pollution occurring indoors may occur unexpectedly or drastically. In a case where the occurring pollution is detected by the gas sensor, the dust sensor, etc., the sensor cannot detect the pollution until the polluted air reaches the sensor. Therefore, the air supply fan 110 and the exhaust fan 120 cannot operate before the pollution reaches the sensor. If the position where the pollution occurs is separated from the sensor, the tendency is remarkable. Further, diffusion of the pollution has been already started at a time when the pollution is detected, and the time necessary for purification of the pollution becomes long. In addition, even when the air supply fan 110 and the exhaust fan 120 are operated, a predetermined time is necessary until intended ventilation performance becomes stable.

In contrast, in the ventilation system 1 including the above-described configuration, the indoor pollution level prediction section 21 predicts the occurrence degree of the indoor pollution based on the indoor pollution influential factor detected by the indoor sensor 17, and the air supply amount of the air supply fan 110 and the exhaust amount of the exhaust fan 120 are changed based on the influence on the pollution level of the indoor air by the indoor pollution influential factor.

Accordingly, it is possible to predict occurrence of indoor pollution, and to start operation of the air supply fan 110 and the exhaust fan 120 in advance, thereby rapidly eliminating pollution of the indoor air. In other words, activity etc. that may cause indoor pollution is detected and pollution purifying operation is started before or immediately after pollution starts to occur. This makes it possible to maintain comfort while preventing increase of indoor pollutants.

In particular, action of a person such as cooking, smoking, cleaning, and opening/closing of a window is strongly related to occurrence of pollution. Therefore, it is important to detect action of a person as the indoor pollution influential factor. For example, a function to start operation of a range hood along with ON/OFF of an IHCH (Induction Heating Cooking Heater) leads to prevention of pollution. This is predictable also from power consumption data managed by the HEMS 240. In addition, operation of, for example, a microwave oven and a rice cooker is also predictable through the HEMS 240, etc.

Further, when action of a person with respect to these cooking appliances is detected and the detected action of the person is stored, the ventilation system 1 can understand that the position of the person during operation of the IHCH, the microwave oven, etc. is the kitchen. In addition, it is possible to predict occurrence of pollution at a time when the person moves to the kitchen and to start ventilation operation in advance.

Moreover, in the above-described action prediction, time data measured by a timer is added to allow for rough presumption whether the person approaches a refrigerator to simply get a drink or the person goes to the kitchen for preparation of a meal. The cooking action is predictable with high accuracy when the plurality of functions such as detection of the position and the action of a person, the HEMS 240, the timer, and the action leaning are integrally used. Further, the action prediction with high accuracy is performable with respect to, for example, action to get a cleaner, without limitation to the cooking action.

Note that the timer function used at this time is included in, for example, the control unit 11. Further, the learning function is achievable as one of the combined functions of the control unit 11, the main storage unit 12, and the auxiliary storage unit 13. For example, an artificial intelligence technology may be applied to the learning function.

In addition, occurrence of pollution can be predicted by associating sound and action of a person with each other. Examples of action that is not determinable from the power consumption managed by the HEMS 240 include opening/closing of a window. Therefore, opening of the window is determined from opening/closing sound of the window, and the position and the action of a person at this time are stored. This allows for prediction of opening/closing of the window based on action and behavior of approaching the window.

For example, in a case where a window is open and the outdoor pollution level is small, it is possible to strengthen the operation of the exhaust fan 120 to promote inflow of air from the window. On the other hand, in a case where the outdoor pollution level is large, warning etc. is performed at a time when the user approaches the window, which makes it possible to prevent inflow of pollution. In addition, in the case where the air purifying mechanism as described above is provided in the air supply fan 110, it is possible to strengthen the operation of the air supply fan 110 to intentionally generate air flow from indoors toward outdoors.

The ventilation system 1 can use sound to understand outdoor matters. For example, the ventilation system 1 detects footsteps of a person walking in a passage to predict entrance and exit of a person to/from a specific indoor room, thereby previously starting air purifying operation. Further, the ventilation system 1 detects sound of barbecue etc. in a garden to predict occurrence of outdoor pollution earlier than the outdoor pollution level acquisition unit 210 and to cope with the pollution.

The detection is not performable if the sound does not reach; however, it is advantageous that the sound is sensed earlier than the pollution. Occurrence of the sound and the concentration of the occurring pollution are associated and stored, which enables the ventilation system 1 to notice occurrence of pollution at the same time as occurrence of the sound without following action of a person, etc., and to predict occurrence of pollution at higher speed.

In addition, inflow of pollution may be predicted from atmospheric pressure variation, wind velocity variation, etc. caused by opening/closing of a door. Further, in recent years, it has been reported that solar radiation, VOC gas with low concentration, etc. are chemically reacted to generate secondary particles (SOA). Therefore, timing at which pollution is increased may be predicted from an amount of solar radiation and the concentration of the VOC gas.

Industrial Applicability

The present invention is usable in the ventilation system that controls operation of the air supply means for supplying air from outdoors to indoors and operation of the exhaust means for exhausting air from indoors to outdoors.

Reference Signs List

| | |
|---|---|
| 1 | Ventilation system |
| 11 | Control unit |
| 12 | Main storage unit |
| 13 | Auxiliary storage unit |
| 14 | Input unit |
| 15 | Display unit |
| 16 | Communication unit |
| 17 | Indoor sensor |
| 18 | Output unit |
| 19 | Bus |
| 21 | Indoor pollution level prediction section |
| 22 | Air supply and exhaust amount control section |
| 100 | Ventilation controller |

110   Air supply fan
120   Exhaust fan
200   Facility apparatuses
210   Outdoor pollution level acquisition unit
211   Outdoor sensor
212   External information acquisition section
220   Air conditioning apparatus
230   Air purifier
240   HEMS

**Claims**

1.  A ventilation system, comprising:

    air supply means (110) configured for supplying air from outdoors to indoors;
    exhaust means (120) configured for exhausting air from the indoors to the outdoors;
    an indoor sensor (17) configured to detect one or more of action and a position of a person indoors, indoor sound, and change of indoor air pressure as an indoor pollution influential factor that influences a pollution level of indoor air;
    outdoor pollution level acquisition means (210) configured for acquiring an outdoor pollution level that is a pollution level of outdoor air; and
    control means (11) configured for controlling an air supply amount of the air supply means (110) and an exhaust amount of the exhaust means (120), wherein
    the air supply amount of the air supply means (110) and the exhaust amount of the exhaust means (120) can be changed independently of each other, and
    the air supply amount of the air supply means (110) and the exhaust amount of the exhaust means (120) are changed based on influence on the pollution level of the indoor air by pollution inflow from the outdoors to the indoors corresponding to the outdoor pollution level and the air supply amount of the air supply means (110) as well as influence on the pollution level of the indoor air by the indoor pollution influential factor.

2.  The ventilation system according to claim 1, wherein the outdoor pollution level acquisition means (210) includes an outdoor sensor (211) configured to detect one or both of outdoor gas concentration and outdoor dust concentration.

3.  The ventilation system according to claim 1 or 2, wherein the outdoor pollution level acquisition means (210) includes external information acquisition means (212) configured for acquiring pollution information on the outdoor air from outside.

4.  The ventilation system according to any one of claims 1 to 3, wherein the control means (11) includes:

    indoor pollution level prediction means (21) configured for predicting the pollution level of the indoor air based on the action and position of the person indoors as the indoor pollution influential factor detected by the indoor sensor (17), the outdoor pollution level acquired by the outdoor pollution level acquisition means (210), and the air supply amount of the air supply means (110), and
    air supply and exhaust amount control means (22) configured for controlling the air supply amount of the air supply means (110) and the exhaust amount of the exhaust means (120) based on the pollution level of the indoor air predicted by the indoor pollution level prediction means (21).

5.  The ventilation system according to claim 4, wherein the air supply and exhaust amount control means (22) configured to control the air supply amount of the air supply means (110) and the exhaust amount of the exhaust means (120) not to cause a ventilation amount to become lower than a predetermined ventilation amount.

6.  The ventilation system according to claim 4 or 5, further comprising display means (15) configured for displaying the pollution level of the indoor air predicted by the indoor pollution level prediction means (21).

7.  The ventilation system according to any one of claims 1 to 5, further comprising display means (15) configured for displaying one or more of the action and position of the person indoors as the indoor pollution influential factor detected by the indoor sensor (17), the outdoor pollution level acquired by the outdoor pollution level acquisition means (210), the air supply amount of the air supply means (110), and the exhaust amount of the exhaust means (120).

**Patentansprüche**

1. Lüftungssystem, umfassend:

ein Luftzufuhrmittel (110), das eingerichtet ist, Luft von draußen nach drinnen zuzuführen;
ein Abluftmittel (120), das eingerichtet ist, Luft von drinnen nach draußen abzuführen;
einen Innenraumsensor (17), der eingerichtet ist, eines oder mehrere einer Aktion und einer Position einer Person drinnen, von Innenraumgeräuschen und einer Änderung von Innenraumluftdruck als einen Innenraumverschmutzungseinflussfaktor zu erfassen, der einen Verschmutzungsgrad von Innenraumluft beeinflusst;
ein Außenverschmutzungsgradbeschaffungsmittel (210), das eingerichtet ist, einen Außenverschmutzungsgrad, der ein Verschmutzungsgrad von Außenluft ist, zu beschaffen; und
ein Steuermittel (11), das eingerichtet ist, eine Luftzufuhrmenge des Luftzufuhrmittels (110) und eine Abluftmenge des Abluftmittels (120) zu steuern, wobei
die Luftzufuhrmenge des Luftzufuhrmittels (110) und die Abluftmenge des Abluftmittels (120) unabhängig voneinander geändert werden können, und
die Luftzufuhrmenge des Luftzufuhrmittels (110) und die Abluftmenge des Abluftmittels (120) auf Grundlage eines Einflusses auf den Verschmutzungsgrad der Innenraumluft durch Verschmutzungszufluss von draußen nach drinnen, der dem Außenverschmutzungsgrad und der Luftzufuhrmenge des Luftzufuhrmittels (110) entspricht, sowie eines Einflusses auf den Verschmutzungsgrad der Innenraumluft durch den Innenraumverschmutzungseinflussfaktor geändert werden.

2. Lüftungssystem nach Anspruch 1, wobei das Außenverschmutzungsgradbeschaffungsmittel (210) einen Außensensor (211) umfasst, der eingerichtet ist, eines oder beides einer Außengaskonzentration und einer Außenstaubkonzentration zu erfassen.

3. Lüftungssystem nach Anspruch 1 oder 2, wobei das Außenverschmutzungsgradbeschaffungsmittel (210) ein externes Informationsbeschaffungsmittel (212) umfasst, das eingerichtet, ist Verschmutzungsinformationen über die Außenluft von außen zu beschaffen.

4. Lüftungssystem nach einem der Ansprüche 1 bis 3, wobei das Steuermittel (11) umfasst:

ein Innenraumverschmutzungsgradvorhersagemittel (21), das eingerichtet ist zum Vorhersagen des Verschmutzungsgrades der Innenraumluft auf Grundlage der Aktion und Position der Person drinnen als den Innenraumverschmutzungseinflussfaktor, der von dem Innenraumsensor (17) erfasst wird, dem von dem Außenverschmutzungsgradbeschaffungsmittel (210) beschafften Außenverschmutzungsgrad, und der Luftzufuhrmenge des Luftzufuhrmittels (110), und
ein Luftzufuhr- und Abluftmengensteuermittel (22), das eingerichtet ist zum Steuern der Luftzufuhrmenge des Luftzufuhrmittels (110) und der Abluftmenge des Abluftmittels (120) auf Grundlage des Verschmutzungsgrades der Innenraumluft, der von dem Innenraumverschmutzungsgradvorhersagemittel (21) vorhergesagt wird.

5. Lüftungssystem nach Anspruch 4, wobei das Luftzufuhr- und Abluftmengensteuermittel (22) eingerichtet ist, die Luftzufuhrmenge des Luftzufuhrmittels (110) und die Abluftmenge des Abluftmittels (120) zu steuern, eine Lüftungsmenge nicht zu veranlassen, niedriger als eine vorbestimmte Lüftungsmenge zu werden.

6. Lüftungssystem nach Anspruch 4 oder 5, ferner ein Anzeigemittel (15) umfassend, das eingerichtet ist, den Verschmutzungsgrad der Innenraumluft, der von dem Innenraumverschmutzungsgradvorhersagemittel (21) vorhergesagt wird, anzuzeigen.

7. Lüftungssystem nach einem der Ansprüche 1 bis 5, ferner ein Anzeigemittel (15) umfassend, das eingerichtet ist zum Anzeigen eines oder mehrerer der Aktion und Position der Person drinnen als den Innenraumverschmutzungseinflussfaktor, der von dem Innenraumsensor (17) erfasst wird, dem von dem Außenverschmutzungsgradbeschaffungsmittel (210) beschafften Außenverschmutzungsgrad, der Luftzufuhrmenge des Luftzufuhrmittels (110) und der Abluftmenge des Abluftmittels (120).

**Revendications**

1. Système de ventilation, comprenant :

   des moyens d'approvisionnement en air (110) configurés pour fournir de l'air à partir de l'extérieur vers l'intérieur ;
   des moyens d'évacuation (120) configurés pour évacuer l'air à partir de l'intérieur vers l'extérieur ;
   un capteur intérieur (17) configuré pour détecter un ou plusieurs d'une action et d'une position d'une personne à l'intérieur, de bruit à l'intérieur, et d'une modification de la pression de l'air à l'intérieur, en tant que facteur influent de pollution à l'intérieur qui influence le niveau de pollution de l'air à l'intérieur ;
   des moyens d'acquisition du niveau de pollution à l'extérieur (210) configurés pour acquérir le niveau de pollution à l'extérieur qui est le niveau de pollution de l'air à l'extérieur ; et
   des moyens de commande (11) configurés pour commander la quantité d'approvisionnement en air des moyens d'approvisionnement en air (110), et la quantité d'évacuation des moyens d'évacuation (120), dans lequel
   la quantité d'approvisionnement en air des moyens d'approvisionnement en air (110) et la quantité d'évacuation des moyens d'évacuation (120) peuvent être modifiées indépendamment l'une de l'autre, et
   la quantité d'approvisionnement en air des moyens d'approvisionnement en air (110), et la quantité d'évacuation des moyens d'évacuation (120) sont modifiées sur la base de l'influence sur le niveau de pollution de l'air à l'intérieur par un apport de pollution à partir de l'extérieur vers l'intérieur correspondant au niveau de pollution à l'extérieur et à la quantité d'approvisionnement en air des moyens d'approvisionnement en air (110) ainsi que de l'influence sur le niveau de pollution de l'air à l'intérieur par le facteur influent de pollution à l'intérieur.

2. Système de ventilation selon la revendication 1, dans lequel les moyens d'acquisition du niveau de pollution à l'extérieur (210) comprennent un capteur extérieur (211) configuré pour détecter la concentration en gaz à l'extérieur et / ou la concentration en poussières à l'extérieur.

3. Système de ventilation selon la revendication 1 ou 2, dans lequel les moyens d'acquisition du niveau de pollution à l'extérieur (210) comprennent des moyens d'acquisition d'informations extérieures (212) configurés pour acquérir des informations de pollution concernant l'air extérieur en provenance de l'extérieur.

4. Système de ventilation selon l'une quelconque des revendications 1 à 3, dans lequel les moyens de commande (11) comprennent :

   des moyens de prévision du niveau de pollution à l'intérieur (21) configurés pour prévoir le niveau de pollution de l'air à l'intérieur sur la base de l'action et de la position de la personne à l'intérieur en tant que facteur influent de pollution à l'intérieur détectée par le capteur intérieur (17), du niveau de pollution à l'extérieur acquis par les moyens d'acquisition du niveau de pollution à l'extérieur (210), et de la quantité d'approvisionnement en air des moyens d'approvisionnement en air (110), et
   des moyens de commande de la quantité d'approvisionnement et d'évacuation de l'air (22) configurés pour commander la quantité d'approvisionnement en air des moyens d'approvisionnement en air (110) et la quantité d'évacuation des moyens d'évacuation (120) sur la base du niveau de pollution de l'air à l'intérieur prévu par les moyens de prévision du niveau de pollution à l'intérieur (21).

5. Système de ventilation selon la revendication 4, dans lequel les moyens de commande de la quantité d'approvisionnement et d'évacuation de l'air (22) configurés pour commander la quantité d'approvisionnement en air des moyens d'approvisionnement en air (110) et la quantité d'évacuation des moyens d'évacuation (120), font en sorte que la quantité de ventilation ne devienne pas inférieure à une quantité de ventilation prédéterminée.

6. Système de ventilation selon la revendication 4 ou 5, comprenant en outre des moyens d'affichage (15) configurés pour afficher le niveau de pollution de l'air à l'intérieur prévu par les moyens de prévision du niveau de pollution à l'intérieur (21).

7. Système de ventilation selon l'une quelconque des revendications 1 à 5, comprenant en outre des moyens d'affichage (15) configurés pour afficher un ou plusieurs de l'action et de la position de la personne à l'intérieur en tant que facteur influent de pollution à l'intérieur détecté par le capteur intérieur (17), du niveau de pollution à l'extérieur acquis par les moyens d'acquisition du niveau de pollution à l'extérieur (210), de la quantité d'approvisionnement en air des moyens d'approvisionnement en air (110), et de la quantité d'évacuation des moyens d'évacuation (120).

## FIG. 1

FIG. 2

# FIG. 3

11: CONTROL UNIT
12: MAIN STORAGE UNIT
13: AUXILIARY STORAGE UNIT
14: INPUT UNIT
15: DISPLAY UNIT
16: COMMUNICATION UNIT
17: INDOOR SENSOR
18: OUTPUT UNIT
110: AIR SUPPLY FAN
120: EXHAUST FAN
210: OUTDOOR POLLUTION LEVEL ACQUISITION UNIT
220: AIR CONDITIONING APPARATUS
230: AIR PURIFIER

## FIG. 4

210: OUTDOOR POLLUTION LEVEL ACQUISITION UNIT
211: OUTDOOR SENSOR
212: EXTERNAL INFORMATION ACQUISITION SECTION

## FIG. 5

11: CONTROL UNIT
17: INDOOR SENSOR
21: INDOOR POLLUTION LEVEL PREDICTION SECTION
22: AIR SUPPLY AND EXHAUST AMOUNT CONTROL SECTION
110: AIR SUPPLY FAN
120: EXHAUST FAN
210: OUTDOOR POLLUTION LEVEL ACQUISITION UNIT

EP 3 521 715 B1

FIG. 6

| POLLU-TION LEVEL | OUTDOORS >THRESHOLD a >INDOORS | INDOORS >THRESHOLD a >OUTDOORS | OUTDOORS >INDOORS >THRESHOLD a | INDOORS >OUTDOORS >THRESHOLD a | THRESHOLD a >OUTDOORS, INDOORS |
|---|---|---|---|---|---|
| AIR SUPPLY | STOPPED (CLOSED) | STRONG | WEAK | MIDDLE | OPTIONAL EQUAL TO OR LOWER THAN MIDDLE |
| AIR EXHAUST | MIDDLE | STRONG | MIDDLE | WEAK | MIDDLE |

# FIG. 7

# FIG. 8

| POLLUTION | | VENTILATION OPERATION | | AIR PURIFIER | AIR CONDITIONING APPARATUS | |
|---|---|---|---|---|---|---|
| OUTDOORS | OCCURRING INDOORS | AIR SUPPLY | AIR EXHAUST | | HEATING | COOLING |
| HIGH | PRESENCE | STOPPED | MIDDLE | STRONG | WEAK | MIDDLE |
| HIGH | ABSENCE | STOPPED | MIDDLE | WEAK | WEAK TO OFF | WEAK TO OFF |
| LOW | PRESENCE | STRONG | STRONG | WEAK | STRONG | STRONG |
| LOW | ABSENCE | OPTIONAL | MIDDLE | OFF | MIDDLE | WEAK |

21

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H05015728 A
- EP 1752715 A1
- KR 100765164 B1
- FR 2676367
- JP 2014047961 A